# EUROPÄISCHE PATENTSCHRIFT

(11) **EP 1 322 483 B1**
(45) Veröffentlichungstag und Bekanntmachung des Hinweises auf die Patenterteilung: **21.04.2004**
(21) Anmeldenummer: 01966794.8
(22) Anmeldetag: 17.09.2001
(51) Int. Cl.: B60B 3/06, B60B 3/10

(54) **RAD-GUSSFELGE**
CAST WHEEL RIM
JANTE DE ROUE COULEE

(30) Priorität: 06.10.2000 AT 7452000 U
(43) Veröffentlichungstag der Anmeldung: 02.07.2003
(73) Patentinhaber: Austria Alu-Guss-Gesellschaft m.b.H., 5282 Braunau-Ranshofen (AT)
(72) Erfinder: LANGGARTNER, Johann, A-5133 Gilgenberg (AT); HUBER, Helmuth, A-5241 Maria Schmolln (AT)
(74) Vertreter: Weinzinger, Arnulf, Dipl.-Ing.
(86) Internationale Anmeldenummer: PCT/AT2001/000294
(87) Internationale Veröffentlichungsnummer: WO 2002/028669

(56) Entgegenhaltungen:
- WO-A-01/66283
- WO-A-99/39923
- DE-A- 4 138 558
- DE-U- 29 723 749

## Beschreibung

Die Erfindung betrifft eine Rad-Gussfelge mit einem Leichtmetallkörper, der zumindest teilweise wenigstens einen Formteil umschließt, der einen eingegossenen Kern bildet und ein mittleres spezifisches Gewicht kleiner als jenes des für den Guss verwendeten Leichtmetalls aufweist.

Um einerseits das Eigengewicht von Rad-Gussfelgen zu verringern, und andererseits weiterhin eine hohe Festigkeit der Radfelge zu gewährleisten, sind seit geraumer Zeit Versuche angestellt worden, hohle bzw. verlorene Kerne mit möglichst geringem spezifischen Eigengewicht in Radfelgen vorzusehen.

Aus der DE 206 973 A ist eine Radfelge aus Aluminium bekannt, bei der verschiedene Teile des Rades aus einem hohlen, widerstandsfähigen Metall bestehen, wie z.B. Stahl oder dergl., die hohle Kerne bilden und von einer leichten Aluminiumlegierung umgossen werden.

Ebenfalls wurde vorgeschlagen (s. z.B. DE 41 38 558 A), Felgen mit Hohlspeichen herzustellen, die mit Hilfe von Sandkernen im Kokillenwerkzeug erzeugt werden, wobei die Sandkerne nach der Herstellung aus der Felge entfernt werden.

Weiters ist aus der US 3 253 862 A eine Rad-Gussfelge bekannt, zu deren Herstellung Aluminium um einen aus Metallwolle bestehenden verlorenen Kern gegossen wird.

In der WO 99/39923 A ist ferner eine Rad-Gussfelge beschrieben, bei welcher zur Verringerung des Eigengewichts der Rad-Gussfelge ein eingegossener Kern vorgesehen ist, der ein geringeres spezifisches Gewicht als jenes des für den Guss verwendeten Leichtmetalls aufweist und hierfür insbesondere ein aus Aluminiumschaum bestehender Kernteil ist. Bei der Fertigung von derartigen Rad-Gussfelgen treten Probleme auf, da der Kern nicht auf die Gießtemperatur vorgeheizt werden kann und beim Umgießen mit Leichtmetall erwärmt wird, wodurch im Aluminiumschaum vorliegendes Gas expandiert und es hierdurch zu Festigkeits-mindernden Gaseinschlüssen im Leichtmetall-Felgenkörper kommen kann. Ein Vorwärmen des Kernteils auf die Temperatur des flüssigen Leichtmetalls - wie dies wünschenswert wäre, um die Expansion der eingeschlossenen Luft beim Gießvorgang zu vermeiden - ist nicht möglich, da der Aluminiumschaum-Kernteil seine Formstabilität verlieren würde.

Es ist nun Aufgabe der Erfindung, eine Rad-Gussfelge mit einem geringen Eigengewicht zu schaffen, bei welcher die fertigungstechnischen Probleme hinsichtlich des Verlusts der Formstabilität bzw. des expandierenden Gases des Formteils nicht auftreten, und somit eine einfach herzustellende, eine hohe Festigkeit aufweisende Rad-Gussfelge zu schaffen.

Die Rad-Gussfelge der eingangs angeführten Art ist dadurch gekennzeichnet, dass der Formteil aus einem Presskörper aus einem porösen Silikat-Material besteht.

Mit Hilfe eines Formteils aus einem porösen Silikat-Material wird ein eingegossener Kern in der Rad-Gussfelge vorgesehen, der eine hohe Temperaturbeständigkeit aufweist, wodurch dieser beim Gießvorgang zumindest im Wesentlichen auf die Gießtemperatur vorgewärmt werden kann und beim Vorwärmen in seiner Form stabil bleibt; nach dem Vorwärmen kommt es beim Umgießen mit dem für den Guss verwendeten Leichtmetall demgemäß zu keiner Gasexpansion. Weiters unterbleibt auf Grund der Struktur des Silikat-Materials ein Eindringen des geschmolzenen Leichtmetalls in die Öffnungen des porösen Materials.

Um zuverlässig gewährleisten zu können, dass beim Umgießen des Formteils die in diesem eingeschlossene Luft keiner Expansion unterliegt, wodurch es zu Festigkeits-mindernden Gaseinschlüssen im Leichtmetall-Körper und somit zu einer hohen Ausschussware bei der Fertigung kommen würde, ist es von Vorteil, wenn das Silikat-Material eine Temperaturbeständigkeit bis zu einer Temperatur aufweist, die höher ist als der Schmelzpunkt des für den Guss verwendeten Leichtmetalls. Somit kann der Formteil problemlos auf die für das Umgießen zweckmäßige Temperatur vorgewärmt werden, wobei er seine für die Handhabung erforderliche Formstabilität behält; jedoch unterbleibt eine weitere Erwärmung des Formteils während des Gießens und selbstverständlich auch eine mit der Erwärmung erfolgende Expansion des im porösen Formteil eingeschlossenen Gases.

Da bei der Fertigung von Rad-Gussfelgen vorwiegend Aluminium eingesetzt wird, welches im Wesentlichen bei einer Temperatur von 700°C vergossen wird, ist es günstig, wenn das Silikat-Material eine Temperaturbeständigkeit bis mindestens 1000°C aufweist. Somit kann der Formteil unter Beibehaltung seiner für die Fertigung der Rad-Gussfelge erforderliche Form auf eine Temperatur vorgewärmt werden, die über jener der Vergießtemperatur des Leichtmetalls liegt. Aufgrunddessen wird im porösen Silikat-Material eingeschlossene Luft während des Gießens nicht weiter expandieren, wodurch Gaseinschlüsse im Leichtmetall-Körper unterbleiben.

Zur Herstellung eines kostengünstigen, fertigungstechnisch einfach herstellbaren, einen eingegossenen Kern bildenden Formteils ist es von Vorteil, wenn das Silikat-Material aus Al-, Mg- bzw. Fe-Silikaten besteht. Insbesondere wird ein Material für den Formteil verwendet, welches allen Anforderungen hinsichtlich Temperaturbeständigkeit, Unterbleiben von Infiltration des Leichtmetalls und Kosteneffizienz genügt, wenn das Silikat-Material aus silikatisch gebundenem Aluminium-Eisen-Magnesiumsilikat besteht.

Um ein gegenüber Rad-Gussfelgen mit eingegossenen Kernen aus Metallschaum reduziertes Eigengewicht der Felge zu erreichen, ist es von Vorteil, wenn die spezifische Dichte des mineralisch/keramischen Materials kleiner 0,7 g/cm³, vorzugsweise im Wesentlichen 0,4 g/cm³, ist.

Bevorzugt wird ein Material auf Basis von Vermiculit, einem Al-, Fe-, Mg-Silikat aus der Gruppe der Glimmerminerale verwendet, welches zum Austreiben von Kristallwasser rasch erhitzt wird, wobei die einzelnen Plättchenschichten der Kristallstruktur auseinander getrieben werden und sich die ursprünglich festen, flachen Kristalle zu langen wurmartigen Partikeln ausdehnen. Das so erhaltene Granulat-artige Material wird dann mit einem Wasserglas-artigen Binder gemischt, zu einem Presskörper gepresst und getrocknet, wonach es als Formteil zum Umgießen mit Leichtmetall, zur Herstellung der Rad-Gussfelge, einsetzbar ist.

Weiters hat das Vorsehen eines solchen porösen Silikat-Formteils den Vorteil, dass auf Grund der Struktur des Silikat-Materials eine Infiltration von sich aus unterbleibt und nicht erst die Bildung einer Guss-beständigen geschlossenen Außenhaut auf einem metallisch-porösen Formteil die Infiltration verhindert. Dies führt zu einer wesentlichen Vereinfachung der Prozessführung bei der Herstellung von Rad-Gussfelgen mit einem Leichtmetall-Körper und eingegossenem Leicht-Kern.

Die Erfindung wird nachstehend anhand von in der Zeichnung veranschaulichten, besonders bevorzugten Ausführungsbeispielen, auf die sie jedoch nicht beschränkt sein soll, noch weiter er läutert. Im Einzelnen zeigen:

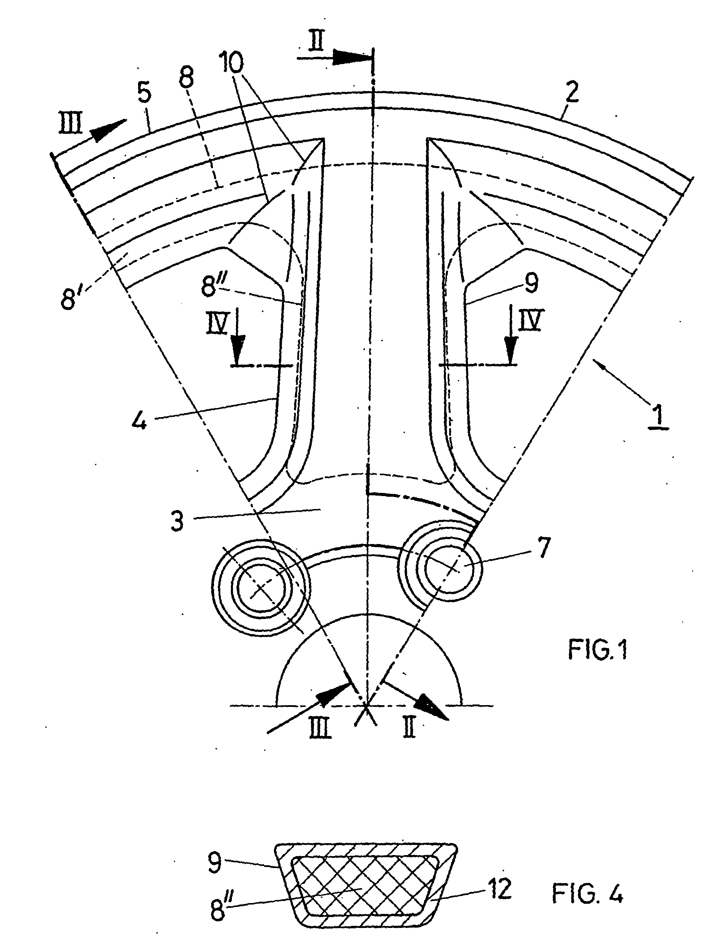

Fig.1 einen sektorförmigen Ausschnitt einer Rad-Gussfelge;
Fig.2 einen radialen Schnitt durch diese Rad-Gussfelge gemäß der Linie II-II in Fig.1, im Bereich einer Speiche der Rad-Gussfelge;
Fig.3 einen demgegenüber winkelmäßig versetzten Schnitt, entsprechend der Linie III-III in Fig.1, zur Veranschaulichung des Querschnitts der Rad-Gussfelge im Bereich einer Ausnehmung zwischen den Speichen der Rad-Gussfelge; und
Fig.4 einen Querschnitt im Bereich einer Speiche dieser Rad-Gussfelge, gemäß der Linie IV-IV in Fig.1.

Die in der Zeichnung veranschaulichte, derzeit als besonders bevorzugt angesehene Rad-Gussfelge 1 (nachstehend kurz Felge genannt) besteht aus einem als Verbundkörper ausgebildeten Felgenkörper 2, der einen Nabenbereich 3, einen Rippenbereich 4 und einen Hornbereich 5 mit einem Felgenbett 6 aufweist. Im Nabenbereich 3 sind in herkömmlicher Weise Bolzenbohrungen 7 zum Anschrauben der Felge 1 mit dem darauf angebrachten, nicht näher gezeigten Reifen vorgesehen.

Der Felgenkörper 2 wird in an sich herkömmlicher Weise aus Leichtmetall gegossen; beispielsweise handelt es sich bei der vorliegenden Felge um eine gegossene Aluminium- oder Magnesiumfelge. Im Wesentlichen wird wie bei herkömmlichen Leichtmetallfelgen bei der vorliegenden Felge 1 das Leichtmetall in Form von geschlossenen "Hohl"profilen in der Art von Kastenprofilen gegossen, wodurch hohe Festigkeitswerte erzielt werden können. Um dabei die Herstellung so einfach wie möglich zu halten, werden die "Hohl"räume in diesen Kastenprofilen oder allgemein in den geschlossenen Profilen der Felge 1 durch leichtgewichtige Formteile ausgefüllt, die aus porösem Silikat-Material in Form von Presskörpern vorgefertigt und dann beim Gießen der Felgen 1 in das Gießwerkzeug (nicht dargestellt) eingelegt werden.

Mit Hilfe dieser Formteile wird der Herstellungsprozess gegenüber Formteilen aus Metall bzw. Metallschaum wesentlich vereinfacht, da sie eine Temperaturbeständigkeit aufweisen, die die Gießtemperatur von üblichen Leichtmetallen, wie Aluminium und Aluminium-Magnesium-Legierungen, übersteigt. Hierdurch kann der Formteil vor dem Gießen unter Beibehaltung seiner Form auf eine Temperatur vorgewärmt werden, welche die Gießtemperatur übersteigt. Dies ist von großem Vorteil, da die in dem Formteil geringer spezifischer Masse eingeschlossene Luft beim Gießen keiner Expansion unterzogen wird, welche Festigkeits-mindernde Gaseinschlüsse in dem die Formteile umgebenden Leichtmetallkörper verursachen könnte.

Im vorliegenden Ausführungsbeispiel ist ein einstückiger Formteil 8, nämlich Presskörper, aus porösem Silikat-Material vorgesehen, der im Hornbereich bei 8' kreisförmig geschlossen ist, und der im Rippenbereich 4, im Bereich der Felgenspeichen 9, in einem Stück mit radial einwärts abstehenden Speichen-Formteilen 8" ausgebildet ist.

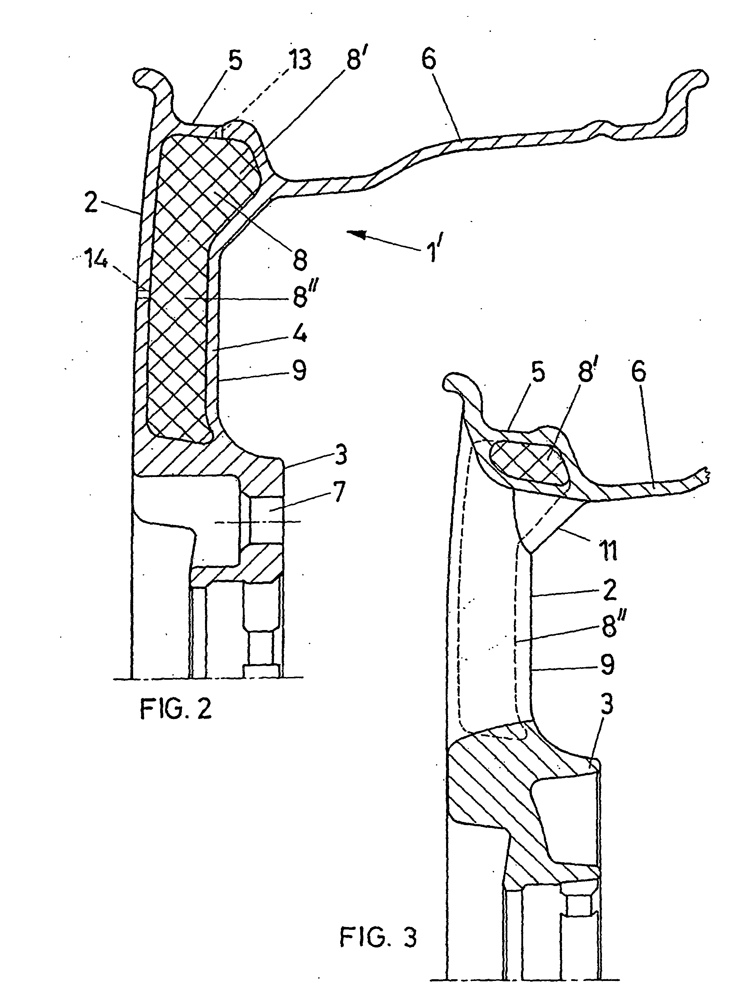

Wie aus der Zeichnung, insbesondere Fig.3 im Vergleich zu Fig.2, ersichtlich ist, ist der Formteil 8, d.h. der kreisförmig geschlossene äußere Teil 8', in seinem Bereich zwischen den Speichen 9 im Querschnitt kleiner gestaltet, verglichen mit dem Bereich unmittelbar radial außerhalb der Speichen 9, wobei auch der zugehörige Hornbereich 5 der Felge 1 in diesen Umfangsabschnitten einen kleineren Querschnitt aufweist, der über Übergangsbereiche 10 bzw. 11 an die eine größere Dicke aufweisenden Abschnitte im Bereich der Speichen 9 anschließt.

Je nach Form der Felge - die gezeigte Felge 1 mit den Speichen 9 ist nur als eines von vielen Beispielen anzusehen - kann der Formteil 8 selbstverständlich auch andere Gestalten haben, und insbesondere ist es auch möglich, die Formteile 8" im Bereich der Speichen als von dem reifenförmigen Formteil 8' getrennte Teile vorzusehen. Auch ist es denkbar, im Rippenbereich 4, innerhalb der Speichen 9, mehrere Formteile in Abständen nebeneinander vorzusehen, so dass vom Leichtmetall beim Gießen dann Mehrkammer-Hohlprofile gebildet werden. Von Bedeutung ist jedenfalls, dass durch das Umgießen der leichtgewichtigen Presskörper-Formteile 8 bzw. 8', 8" mit dem Leichtmetall geschlossene Kastenprofile gebildet werden, wie in Fig.4 bei 12 angedeutet ist, wodurch hohe Festigkeitswerte erzielt werden können, und eine gegenüber Metall-Formteilen wesentlich vereinfachte Herstellung.

Dabei können auf einfache Weise - ohne spezielle Vorkehrungen für gegebenenfalls expandierendes Gas - sehr dünnwandige Kastenprofile 12 mit den Formteilen 8 bzw. 8', 8" vorgesehen werden, ohne dass die Festigkeit dadurch beeinträchtigt würde. Weiters weisen die porösen Presskörper-Formteile 8 bzw. 8', 8" im Vergleich zum für die Felge 1 an sich verwendeten Leichtmetall und auch im Vergleich zu Metallschaum-Formteilen ein sehr geringeres mittleres spezifisches Gewicht auf, so dass sich zusätzliche Gewichtsvorteile ergeben.

Als besonders vorteilhaft hat sich in Versuchen silikatisch gebundenes Aluminium-Eisen-Magnesiumsilikat, wie z.B. Vermiculit, für die Herstellung der Formteile 8 bzw. 8', 8" erwiesen, es ist jedoch auch mit vergleichbaren ähnlichen, anderen porösen Silikat-Materialien eine entsprechende vereinfachte Herstellung beim Eingießen im Leichtmetall zu erreichen.

Damit können in den fraglichen Bereichen, wie insbesondere im Bereich der Speichen 9 und im Hornbereich 5, auf wirtschaftliche Weise Querschnitte hergestellt werden, welche durch das Vorsehen von porösen Kernteilen mit einem geringen spezifischen Gewicht bei einer äußerst einfachen Herstellung ein Höchstmaß an Festigkeit bei einem Minimum an Leichtmetall-Masse (und damit bei einem minimalen Gewicht) ermöglichen. Die Silikat-Materialien können, je nach Gasanteil, ein spezifisches Gewicht von beispielsweise 0,4 bis 0,5 kg/dm³ haben, wobei gute Ergebnisse bei praktischen Versuchen mit Silikat-Materialien mit einem spezifischen Gewicht von ca. 0,45 kg/dm³ erzielt werden konnten. Für eine einfache, kostengünstige Herstellung der Formteile 8; 8', 8" werden diese einfach mittels eines Pressverfahrens erzeugt; das Material muss weder gesintert noch gebrannt werden.

Bei der Herstellung können vergleichsweise einfache Formgebungen für die Felge 1 vorgesehen werden, wobei insbesondere keine Abwinkelungen oder dergl. in den fraglichen Bereichen erforderlich sind, wie dies in der Vergangenheit vorgesehen wurde, um die Festigkeit der Profilbereiche zu erhöhen; demgemäß können auch die Gießwerkzeuge für die Felgen 1 relativ einfach gestaltet werden.

Vor dem Gießen des Leichtmetalls, z.B. Gussaluminium, werden die zuvor gefertigten, vorgewärmten Formteile 8 bzw. 8', 8" in das Gießwerkzeug eingelegt und dort mit Hilfe von Zentrierstiften 13, 14 in der richtigen Position festgelegt. Die Zentrierstifte 13, 14 können hinsichtlich einer hohen Temperaturbeständigkeit aus Keramikmaterial bestehen.

Danach wird das Leichtmetall in das Gießwerkzeug eingegossen, wobei die Formteile 8, 8', 8" umgossen werden. Die Zentrierstifte 13, 14, von denen in Fig.2 zwei schematisch angedeutet sind, verbleiben im Leichtmetall der Felge 1, und etwaige über die Außenseite der Felge 1 vorstehende Teile werden nach dem Entformen einfach abgeschliffen.

Die porösen Formteile 8, 8', 8" sind selbstverständlich so zu wählen, dass sie beim Eingießen im Leichtmetall nicht schmelzen. Die vorstehend erwähnten Silikat-Materialien, nämlich besonders bevorzugt Al-, Mg- bzw. Fe-Silikate, sind dabei insofern gut geeignet, als aufgrund ihrer keramischen Struktur ein nachteiliges Eindringen von Leichtmetall unterbleibt. Bei porösen metallischen Materialien hingegen würde erst durch eine bei der Herstellung üblicherweise gebildete Oxidhaut, die eine höhere Schmelztemperatur verglichen mit dem Leichtmetall des Felgenkörpers 2 aufweist, die Infiltration von Leichmetall in den Metallkörper verhindert werden. Sollte dies nicht der Fall sein, müsste bei porösen metallischen Materialien an diese ein Überdruck während des Gießens angelegt werden, um eine Infiltration durch das Leichtmetall zu verhindern.

Die vorliegende Felge 1 eignet sich insbesondere für PKW- und LKW-Räder und für Motorräder, aber auch für Räder im Flugzeugbau.

## Patentansprüche

1. Rad-Gussfelge (1) mit einem Leichtmetallkörper (2), der zumindest teilweise wenigstens einen Formteil (8, 8', 8") umschließt, der einen eingegossenen Kern bildet und ein mittleres spezifisches Gewicht kleiner als jenes des für den Guss verwendeten Leichtmetalls aufweist, **dadurch gekennzeichnet, dass** der Formteil (8, 8', 8'') aus einem Presskörper aus einem porösen Silikat-Material besteht.

2. Rad-Gussfelge nach Anspruch 1, **dadurch gekennzeichnet, dass** das Silikat-Material des Presskörpers eine Temperaturbeständigkeit bis zu einer Temperatur aufweist, die höher ist als der Schmelzpunkt des für den Guss verwendeten Leichtmetalls.

3. Rad-Gussfelge nach Anspruch 2, **dadurch gekennzeichnet, dass** das Silikat-Material des Presskörpers eine Temperaturbeständigkeit bis mindestens 1000°C aufweist.

4. Rad-Gussfelge nach einem der Ansprüche 1 bis 3, **dadurch gekennzeichnet, dass** das Silikat-Material aus Al-, Mg- bzw. Fe-Silikaten besteht.

5. Rad-Gussfelge nach Anspruch 4, **dadurch gekennzeichnet, dass** das Silikat-Material aus silikatisch gebundenem Aluminium-Eisen-Magnesiumsilikat besteht.

6. Rad-Gussfelge nach einem der Ansprüche 1 bis 5, **dadurch gekennzeichnet, dass** die spezifische Dichte des Silikat-Materials kleiner 0,7 g/cm³, vorzugsweise im Wesentlichen 0,4 g/cm³, ist.

## Claims

1. A cast wheel rim (1) including a light-metal body (2) which at least partially encompasses at least one shaped part (8, 8', 8") forming a cast-in core and having a mean specific weight smaller than that of the light metal used for the casting, **characterized in that** the shaped part (8, 8', 8") is comprised of a pressed body made of a porous silicate material.

2. A cast wheel rim according to claim 1, **characterized in that** the silicate material of said pressed body has a temperature resistance up to a temperature that is higher than the melting point of the light metal used for the casting.

3. A cast wheel rim according to claim 2, **characterized in that** the silicate material of the pressed body has a temperature resistance up to at least 1000°C.

4. A cast wheel rim according to any one of claims 1 to 3, **characterized in that** the silicate material is comprised of Al-, Mg- and/or Fe-silicates.

5. A cast wheel rim according to claim 4, **characterized in that** the silicate material is comprised of silicate-bonded aluminum-iron-magnesium silicate.

6. A cast wheel rim according to any one of claims 1 to 5, **characterized in that** the specific density of the silicate material is smaller than 0.7 g/cm³ and, preferably, substantially 0.4 g/cm³.

## Revendications

1. Jante coulée de roue (1), comportant un corps (2) en métal léger qui entoure, au moins partiellement, au moins un élément de moule (8, 8', 8") constituant un noyau intégré, et dont le poids spécifique moyen est inférieur à celui du métal léger utilisé pour la coulée, **caractérisée en ce que** l'élément de moule (8, 8', 8") est constitué d'un corps pressé en un matériau en silicate poreux.

2. Jante coulée de roue selon la revendication 1, **caractérisée en ce que** le matériau en silicate du corps pressé présente une résistance thermique allant jusqu'à une température qui est supérieure au point de fusion du métal léger utilisé pour la coulée.

3. Jante coulée de roue selon la revendication 2, **caractérisée en ce que** le matériau en silicate du corps pressé présente une résistance thermique allant au moins jusqu'à 1 000 °C.

4. Jante coulée de roue selon l'une quelconque des revendications 1 à 3, **caractérisée en ce que** le matériau en silicate est constitué de silicates d'Al, de Mg ou de Fe.

5. Jante coulée de roue selon la revendication 4, **caractérisée en ce que** le matériau en silicate est constitué de silicate d'aluminium, de fer, de magnésium lié par silicification.

6. Jante coulée de roue selon l'une quelconque des revendications 1 à 5, **caractérisée en ce que** la masse volumique du matériau en silicate est inférieur à 0,7 g/cm³, et est de préférence sensiblement de 0,4 g/cm³.
